# EUROPÄISCHE PATENTSCHRIFT

(11) **EP 1 621 871 B1**
(45) Veröffentlichungstag und Bekanntmachung des Hinweises auf die Patenterteilung: **07.03.2007**
(21) Anmeldenummer: 05015237.0
(22) Anmeldetag: 13.07.2005
(51) Int. Cl.: G01N 21/57, G01J 1/04

(54) **Goniophotometer**
Goniophotometer
Goniophotomètre

(30) Priorität: 30.07.2004 DE 102004037355
(43) Veröffentlichungstag der Anmeldung: 01.02.2006
(73) Patentinhaber: Patent-Treuhand-Gesellschaft für elektrische Glühlampen mbH, 81543 München (DE)
(72) Erfinder: Binder, Ulrich, 80803 München (DE); Sauter, Georg, Dr., 38100 Braunschweig (DE); Steudtner, Walter, Dr., 82166 Gräfelfing (DE); Trebbin, Gerhard, 85072 Eichstätt (DE); Wagner, Norbert, 80469 München (DE)

(56) Entgegenhaltungen:
- DE-A1- 3 347 327
- ES-A1- 2 187 384
- US-A- 5 949 534
- PATENT ABSTRACTS OF JAPAN Bd. 2000, Nr. 26, 1. Juli 2002 (2002-07-01) & JP 2001 255270 A (ASAHI SPECTRA CO LTD), 21. September 2001 (2001-09-21)

## Beschreibung

### Technisches Gebiet

Die Erfindung betrifft ein Goniophotometer gemäß dem Oberbegriff des Anspruchs 1.

### Stand der Technik

Zur Messung des Lichtstroms einer Licht-/Strahlungsquelle werden üblicher Weise entweder ein Ulbrichtsches Kugelphotometer oder ein Goniophotometer verwendet.

Das Kugelphotometer besteht aus einer Hohlkugel mit einer mattweiß lackierten Innenfläche, die das Licht einer im Inneren angebrachten Lichtquelle vielfach diffus reflektiert, so dass jedes Flächenstück der Innenfläche gleich stark beleuchtet wird. Die Leuchtdichte einer in einem Schauloch angebrachten Trübglasscheibe ist dann dem Gesamtlichtstrom proportional. In der Praxis ist die Verwendung eines Kugelphotometers relativ problematisch, da eine hinreichende Messgenauigkeit nur nach einer aufwendigen Kalibrierung des Kugelphotometers und bei konstant bleibenden Umgebungsbedingungen und geringer Luftfeuchtigkeit gewährleistet ist.

In der Praxis werden daher Goniophotometer bevorzugt. Diese sind mechanisch-optische Messsysteme, mit denen je nach verwendetem Messgerätekopf die Richtungsabhängigkeit von Größen zur Beschreibung optischer Strahlung, wie beispielsweise der Lichtstärkeverteilungskörper bestimmbar ist. Befindet sich die Licht-/Strahlungsquelle im Ursprung eines Polar-Koordinatensystems (r, ϑ, ϕ), so werden die Werte der Messgröße goniophotometrisch, d.h. für alle Richtungen nacheinander in den Winkelbereichen 0 ≤ ϑ ≤ 180°, 0 ≤ϕ ≤ 360° gemessen. Die Integration des Lichtstärkeverteilungskörpers über den vollen Raumwinkel ergibt den technisch und wirtschaftlich wichtigen Gesamtlichtstrom.

Bei den bisher bekannten Typen kompakter Goniophotometer erfolgt die erforderliche Relativbewegung eines Messgerätekopfes mit Bezug zur Licht-/Strahlungsquelle entlang der Hüllfläche einer (fiktiven) Kugel mit bis zu 3m Radius, wobei die Messrichtung stets zum Kugelmittelpunkt weist, in dem die Licht-/Strahlungsquelle angeordnet ist. Diese Relativbewegung wird erreicht, indem bei konstantem Radius um zwei sich senkrecht schneidende Achsen mit den Winkeln (ϑ,ϕ) gedreht wird, wobei prinzipiell drei Kombinationen der Drehbewegungen möglich sind:
a) Bei feststehendem Messgerätekopf wird die Licht-/Strahlungsquelle um zwei Achsen (vertikal und horizontal) gedreht. Es zeigte sich jedoch, dass die Drehung um eine horizontale Achse die photometrischen Eigenschaften der Lichtquelle unzulässig stark verändert.
b) Die Licht-/Strahlungsquelle und der Messgerätekopf werden jeweils für sich um eine vertikale Achse gedreht (Quelle) bzw. auf einer Kreisbahn (Messgerätekopf) um eine horizontale Achse bewegt. Die Drehungen der Licht-/Strahlungsquelle müssen jedoch sehr langsam erfolgen, um Änderungen der photometrischen Eigenschaften zu vermeiden.
c) Bei feststehender Licht-/Strahlungsquelle wird der Messgerätekopf auf einer Schar kreisförmiger Bahnen entlang der Hüllfläche einer Kugel bewegt. Eine beliebige Brennlage der Licht-/Strahlungsquelle und ihre unbewegte Position während der Messung werden dabei beispielsweise mit einem aufwändigen Kardan-Goniophotometer ermöglicht, wie es unter www.ptb.de/de/org/4/41/412/kalibrierung.htm beschrieben ist. Dabei wird über einen äußeren Rahmen die Licht-/Strahlungsquelle in einer vorgegebenen Brennstellung gehalten, während der Messgerätekopf (Photometer) über zwei innere, kardanförmig miteinander verbundene Rahmen geführt ist. Ein derartiger Kardan-Goniophotometer ist nur mit sehr großem vorrichtungstechnischen Aufwand realisierbar. Ein weiterer Nachteil der vorstehend beschriebenen Lösungen besteht darin, dass die Messzeit zur Ermittlung des Lichtstroms und der Lichtstärkeverteilung relativ lang ist; sie kann beispielsweise 80 min betragen.

Nachteilig bei den bekannten Lösungen ist des Weiteren, dass zur Messung unterschiedlicher Größen, beispielsweise der Lichtstärkeverteilung, der räumlichen Farbverteilung und der Leuchtdichteverteilung unterschiedliche Messgeräteköpfe verwendet werden müssen, so dass mehrere Messungen hintereinander durchgeführt werden müssen, um die einzelnen Größen zu erfassen.

Die Physikalisch-Technische Bundesanstalt (PTB) hat einen robotergestützten Goniophotometer mit drei Robotereinheiten entwickelt, mit dem sich die Messzeiten gegenüber den eingangs beschriebenen Lösungen wesentlich verkürzen lassen.

Die mehrachsigen Roboter sind jeweils mit einer horizontalen Drehachse ausgeführt und über eine hochfeste Halterung an Wandungen eines Messraums befestigt. Ein Roboter hält die Licht-/Strahlungsquelle in der vorbestimmten Brennlage, während die beiden anderen, einander gegenüber liegenden Roboter jeweils zumindest einen Messkopf tragen, die zum Zentrum, d.h. zur Brennlage ausgerichtet sind. Durch geeignete Ansteuerung der Roboter werden dann die Messköpfe mit Radien bis zu 3m um die Licht-/Strahlungsquelle entlang praktisch beliebigen Bewegungsbahnen geführt.

Ein derartiges Goniophotometer wird beispielsweise zur Realisierung der Lichtstromeinheit verwendet und ist aufgrund seiner komplexen Struktur und der hohen soft- und hardwareseitigen Anforderungen sehr teuer und damit der Grundlagenforschung und der Anwendung bei der PTB vorbehalten.

### Darstellung der Erfindung

Demgegenüber liegt der Erfindung die Aufgabe zugrunde, ein Goniophotometer zu schaffen, das bei minimalem vorrichtungstechnischen Aufwand eine Verkürzung der Messzeit oder die Messung unterschiedlicher physikalischer Größen einer optischen Strahlung ermöglicht.

Diese Aufgabe wird bei einem Goniophotometer mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

Das erfindungsgemäße Goniophotometer ist als Hemisphären-Goniophotometer ausgeführt und hat eine Geräteeinheit mit einem umlaufenden Dreharm, der zwei zueinander angestellte Schenkel oder Lagerabschnitte aufweist. An jedem Schenkel des Dreharms ist jeweils ein einen Messkopf tragender Schwenkarm gelagert. Die beiden Schwenkachsen der Schwenkarme und die Drehachse des Dreharms schneiden sich in der Brennlage einer von einem Messobjekthalter gehaltenen Licht-/Strahlungsquelle - im folgenden Lichtquelle genannt. Jeder Schwenkarm lässt sich mittels eines diesem zugeordneten Schwenkantriebs zwischen einer eingeschwenkten Polposition, in der der Messkopf in der Drehachse des Dreharms liegt und einer ausgeschwenkten Äquatorposition, in der der Messkopf entlang einer Umlaufbahn mit maximalem Durchmesser um die Lichtquelle zu verschwenken.

Mit einer derartigen Geometrie lassen sich zwei Messköpfe gleichzeitig entlang einer Hüllfläche einer Hemisphäre um die Lichtquelle führen, so dass beispielsweise beim Einsatz zweier unterschiedlicher Messköpfe zwei Größen während eines Messvorgangs gemessen werden können, so dass sich die Messzeit gegenüber den eingangs beschriebenen Goniophotometern mit nur einem Messkopf wesentlich verringern lässt. Der erfindungsgemäße Aufbau mit einem mittigen Dreharm und zwei daran angelenkten Schwenkarmen lässt sich im Vergleich zu den eingangs beschriebenen Lösungen mit geringem mechanischen und steuerungstechnischen Aufwand realisieren, so dass das Goniophotometer vergleichsweise preiswert hergestellt werden kann.

Durch den symmetrischen Aufbau des Goniophotometers lassen sich die Konstruktions- und Fertigungskosten reduzieren und der Aufwand zur Programmierung für die Prozesssteuerung ist minimal. Die symmetrische Ausgestaltung der Dreharme und der daran angelenkten Schwenkarme sorgt des Weiteren für eine geringe statische und dynamische Unwucht, wobei diese noch weiter verringerbar ist, wenn die Schwenkarme symmetrisch zueinander verschwenkt werden.

Der Aufbau des Goniophotometers ist besonders einfach, wenn sich die Achsen der beiden Schwenkantriebe mit einer Achse des Hauptantriebs für den Dreharm unter einem Winkel von 45° schneiden. Mit einer derartigen Achsenanordnung bleiben die Messköpfe während der Schwenkbewegung der Schwenkarme in Richtung auf die Brennstellung ausgerichtet, ohne dass es einer Nachführung der Messkopfposition bedarf.

Die Messzeit lässt sich weiter verkürzen, wenn der Goniophotometer mit zwei der vorbeschriebenen Geräteeinheiten ausgeführt ist, die diametral zueinander angeordnet sind, wobei die Drehachsen der beiden Hauptantriebe und jeweils zwei Schwenkachsen koaxial zueinander verlaufen. D.h. alle Achsen schneiden sich in der Brennlage der Lichtquelle. Jede Geräteeinheit führt dabei zwei Messköpfe entlang der Hüllfläche einer Hemisphäre, so dass entweder bis zu vier unterschiedliche Größen aufgenommen werden können oder aber bei Verwendung von gleichen Messköpfen die Messzeit entsprechend verringerbar ist oder die Messgenauigkeit durch Abtasten entlang einer Bewegungsbahn mit zwei Messköpfen erhöht werden kann.

Die Geräteeinheiten des Goniophotometers sind besonders kompakt aufgebaut, wenn die Schenkel des Dreharms etwa V-förmig zueinander stehen.

Bei einer erfindungsgemäßen Variante wird es bevorzugt, wenn der Dreharm jeder Geräteeinheit derart an einer Konsole gelagert ist, dass die Drehachse des Hauptantriebs in Horizontalrichtung verläuft.

Bei einem besonders bevorzugten Ausführungsbeispiel sind die Schwenkantriebe der Schwenkarme jeder Geräteeinheit sowie der Hauptantrieb des Dreharms unabhängig von einander ansteuerbar. Dadurch können die beiden Messköpfe beispielsweise entlang zueinander versetzten Umlaufbahnen geführt sein, so dass sich dann die Messzeit gegenüber herkömmlichen Lösungen mit einem Messkopf halbiert. Des Weiteren ist es mit der getrennten Ansteuerung möglich, praktisch beliebige Bewegungsbahnen der einzelnen Messköpfe auf der Hüllfläche der fiktiven Kugel einzustellen.

Bei der erfindungsgemäßen Lösung wird für den Hauptantrieb vorzugsweise ein AC-Synchron-Direktantrieb und für die Schwenkantriebe der Schwenkarme jeweils vorzugsweise ein Getriebemotor verwendet, der jeweils über einen Verstärker angesteuert wird, der am Dreharm gelagert ist. Ein Direktantrieb hat den Vorteil, dass er kein Getriebe benötigt, sehr kompakt baut und mit hoher Genauigkeit ansteuerbar ist. Die Anordnung des Verstärkers auf dem Dreharm hat den Vorteil, dass die gepulsten Leistungssignale zur Ansteuerung der Getriebemotoren nur über einen sehr kurzen Weg übertragen werden müssen, so dass die Gefahr von Interferenzen mit Messsignalen oder dergleichen verringert ist.

Wie bereits vorstehend angedeutet, können die Messköpfe unterschiedlich ausgeführt sein, wobei beispielsweise ein Photometer, ein Dreibereichsfarbkopf, ein Spektralradiometer oder eine Leuchtdichtkamera einsetzbar ist, wobei die Digitalisierung des Messsignals ebenfalls sehr nah am Messkopf erfolgen sollte. Bei der Erfindung ist es daher vorgesehen, die eigentlichen Messgeräte mit den AD-Wandlern ebenfalls an den Dreharmen zu befestigen.

Bei einem besonders bevorzugten Ausführungsbeispiel werden die digitalisierten Messsignale sowie ggf. vorhandene analoge Messsignale und/oder die Steuersignale für die Drehantriebe über einen koaxial zur Drehachse angeordneten Schleifring und ein Bussystem abgegriffen.

Die Positionierung des Messobjekts in Horizontalrichtung ist besonders einfach, wenn der Hauptantrieb mit einer Hohlwelle ausgeführt ist, so dass sich Tragarme eines Messobjekthalters durch die Hohlwelle hindurch erstrecken können.

Die Kollisionsgefahr zwischen den Geräteeinheiten ist minimal, wenn die Dreharme während des Messbetriebs - vorzugsweise um 90° - versetzt zueinander umlaufen, wobei vorzugsweise zu Beginn der Messung die beiden Schwenkarme einer Geräteeinheit in bzw. nahe der Polposition und die Schwenkarme der anderen Geräteeinheit in bzw. nahe der Äquatorposition angeordnet sind.

Die Schwenkantriebe der Schwenkarme sind vorzugsweise so ausgelegt, dass diese umlaufend um 360° verschwenkbar sind.

Die Positionierung der Lichtquelle und die Justierung des Systems sind besonders einfach, wenn in den Achsen des Goniophotometers jeweils Positionierlaser oder dergleichen angeordnet sind.

Zur Erfassung der Drehposition der Schwenkarme und des Dreharms sind diesen Drehwinkelsensoren zugeordnet.

Beispielsweise in dem Fall, in dem eine der Geräteeinheiten als Messobjekthalter verwendet wird, ist es vorteilhaft, den Messgerätehalter so auszuführen, dass die Lichtquelle drehbar ist.

### Kurze Beschreibung der Zeichnungen

Im Folgenden soll die Erfindung anhand eines Ausführungsbeispiels unter Bezugnahme auf Zeichnungen näher erläutert werden. Es zeigen:
- Figur 1: eine Schemadarstellung eines erfindungsgemäßen Hemisphären-Goniophotometers (mit Blick von der Seite);
- Figur 2: eine dreidimensionale Darstellung des Hemisphären-Goniophotometers;
- Figur 3: eine Einzeldarstellung einer Geräteeinheit des Goniophotometers aus Figur 2;
- Figur 4: das Goniophotometer aus Figur 2 mit horizontal verlaufendem Messobjekthalter;
- Figur 5: eine Vorderansicht des Gerätehalters aus Figur 3 zu Beginn eines Messzyklus;
- Figur 6: eine Vorderansicht der zweiten Geräteeinheit des Goniophotometers gemäß Figur 2 zu Beginn des Messzyklus und
- Figur 7: eine Draufsicht einer Geräteeinheit, bei der ein Schwenkarm eingeschwenkt und der zweite Schwenkarm ausgeschwenkt ist.

### Bevorzugte Ausführung der Erfindung

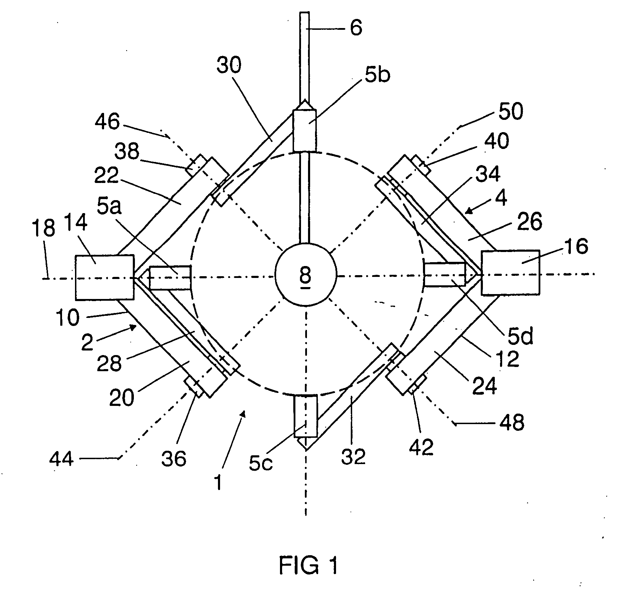

Figur 1 ist eine Schemadarstellung eines Hemisphären-Goniophotometers 1. Dieses besteht im Wesentlichen aus zwei Geräteeinheiten 2, 4 sowie einem Messobjekthalter 6, der eine Licht- oder Strahlungsquelle, beispielsweise eine Lampe 8 zwischen den beiden Geräteeinheiten 2, 4 positioniert.

Jede Geräteeinheit 2, 4 trägt zwei Messköpfe 5a, 5b bzw. 5c, 5d, wobei die Kinematik so ausgelegt ist, dass die beiden Messköpfe 5a, 5b; 5c, 5d der Geräteeinheiten 2, 4 jeweils entlang einer Hüllfläche einer Hemisphäre bewegbar sind. Die von den beiden Geräteeinheiten 2, 4 überstrichenen Hemisphären ergänzen sich dann zu einer Vollkugel, die in Figur 1 gestrichelt angedeutet ist.

Jede Geräteeinheit 2, 4 hat einen etwa V-förmig ausgebildeten Dreharm 10 bzw. 12, der jeweils mittels eines Hauptantriebs 14 bzw. 16 um eine gemeinsame Drehachse 18 umlaufend drehbar gelagert sind: Diese verläuft durch die in ihrer Brennlage gehaltene Lampe 8.

Jeder der Dreharme 10, 12 hat zwei sich hin zur Lampe 8 öffnende Schenkel 20, 22; 24, 26, an deren Endabschnitt jeweils ein Schwenkarm 28, 30 bzw. 32, 34 drehbar gelagert ist. Deren Verschwenkung erfolgt mittels Schwenkantrieben 36, 38; 40, 42, die wie die beiden Hauptantriebe 14, 16 unabhängig voneinander ansteuerbar sind. An den freien Endabschnitten der Schwenkarme 28, 30, 32, 34 ist jeweils einer der Messköpfe 5a, 5b, 5c, 5d derart angeordnet, dass er mit Bezug zur Brennlage der Lampe 8 ausgerichtet ist.

Gemäß Figur 1 verlaufen die Schwenkachsen 44, 50 der beiden Schwenkarme 28, 34 sowie die Schwenkachsen 46, 48 der beiden Schwenkarme 30, 32 jeweils koaxial zueinander, und sämtliche Achsen schneiden sich in der Brennlage der Lampe 8. Der Anstellwinkel der Achsen 46, 48 und 44, 50 mit Bezug zur Drehachse 18 beträgt 45°, d.h. die Schwenkachsen 46, 48 und 44, 50 stehen senkrecht aufeinander. Die Messköpfe 5a, 5b, 5c, 5d sind derart an den Endabschnitten der Schwenkarme 28, 30, 32, 34 angeordnet, dass ihre optische Achse während der Umlaufbahn die Brennlage und somit den Schnittpunkt der Achsen schneidet. Demzufolge ist die optische Achse der Messköpfe 5a, 5b, 5c, 5d um 45 ° mit Bezug zu den jeweiligen Schwenkachsen 44, 46, 48, 50 angestellt.

Bei der Schemadarstellung gemäß Figur 1 befinden sich die beiden Schwenkarme 30, 32 in einer ausgefahrenen Äquatorstellung, in der sie sich etwa in Verlängerung zu den beiden Schenkeln 22 bzw. 24 erstrecken. Die beiden Messköpfe 5b, 5c dieser Schwenkarme 30, 32 überstreichen dann bei einer Drehung der beiden Dreharme 10, 12 um die Drehachse 18 einen Äquator der fiktiven Kugel. Die beiden anderen Schwenkarme 28, 34 befinden sich in einer eingeschwenkten Polposition, in der deren Messköpfe 5a, 5d in der Drehachse 18 liegen und somit mit Bezug zu den beiden Polen der Kugel ausgerichtet sind. Es sei angenommen, dass diese Stellungen bei Beginn einer Messung eingenommen werden. Während der Messung werden dann die ausgeschwenkten Schwenkarme 30, 32 schrittweise bei jeder -Umdrehung um einen vorbestimmten Drehwinkel eingeschwenkt, während entsprechend die zu Beginn der Messung eingeschwenkten Schwenkarme 28, 34 gegenläufig schrittweise ausgeschwenkt werden. Für den Fall, dass alle vier Messköpfe 5a, 5b, 5c, 5d identisch ausgebildet sind, können die Messköpfe einer Geräteeinheit 2, 4 entweder jeweils entlang einer gemeinsamen Bewegungsbahn oder entlang zueinander versetzten Bewegungsbahnen bewegt werden. Bei der ersten Variante werden somit die Messpunkte durch die beiden Messköpfe 5a, 5b jeweils ein mal angefahren, während bei der zuletzt genannten Variante jeder Messkopf 5a, 5b, 5c, 5d unterschiedliche Messpunkte erfasst. Während eines vollständigen Messzyklus kann in Abhängigkeit von der Ansteuerung der beiden Geräteeinheiten 2, 4 praktisch jeder Messpunkt im Winkelbereich von 0 ≤ ϑ≤ 180° und 0 ≤ϕ≤ 360° auf der fiktiven Kugel abgetastet werden. In der Praxis werden - wie im Folgenden ausgeführt - während eines Messzyklus cirka 64.800 Messpunkte aufgenommen und zur Ermittlung des Lichtstroms aufintegriert.

Bei der Verwendung von vier gleichen Messköpfen 5a, 5b, 5c und 5d lässt sich entsprechend die Messzeit gegenüber den herkömmlichen Lösungen mit einem Messkopf auf ein Viertel verringern. In der Praxis wichtiger dürften jedoch Anwendungen sein, bei denen jede Geräteeinheit 2, 4 unterschiedliche Messköpfe 5a, 5b, 5c, 5d trägt, so dass neben der Bestimmung des Lichtstroms und der Ermittlung des vollständigen Lichtverteilungskörpers von Lampen und kleineren Leuchten noch weitere Größen, wie beispielsweise die räumlichen Farbverteilungen, Spektralverteilungen oder Leuchtdichteverteilungen meßbar sind. Dabei kann jede Geräteeinheit 2, 4 mit der gleichen Messkopfpaarung (jeweils zwei unterschiedliche Messköpfe) ausgeführt sein, so dass beispielsweise bei Verwendung eines Dreibereichsfarbmesskopfs und eines Spektralradiometers praktisch alle photometrischen, colorimetrischen und spektroradiometrischen Größen in einem Viertel der Messzeit ermittelbar sind, wie es bei einem herkömmlichen Goniophotometer mit einem Messkopf erforderlich wäre. Mit einem derartigen herkömmlichen Gerät müssten zwei komplette Messzyklen mit jeweils einem Messkopf durchfahren werden; hinzu käme die Zeit, die für einen Messkopfwechsel erforderlich ist.

Bei der Verwendung von vier unterschiedlichen Messköpfen 5a, 5b, 5c, 5d müsste der Messobjekthalter 6 drehbar gelagert sein, so dass nach Abschluss einer ersten Messung die Lampe 8 um 180° für die zweite Halbmessung gedreht wird. Danach sind ohne irgendeinen Umbau alle Messwerte von vier verschiedenen Messsystemen richtungsabhängig aufgelöst für den vollen Raumwinkelbereich vorhanden, wobei die Messdauer gerade einer Messung bei konventionellen Goniophotometern entspricht.

Bei einer simultanen Messung mit gleichen Messköpfen lassen sich die Messwerte durch Bestimmung von Korreiationskoeffizienten zur Feststellung und Korrektur möglicher Instabilitäten verwenden - eine derartige Möglichkeit ist bei konventionellen Goniophotometern nicht vorhanden.

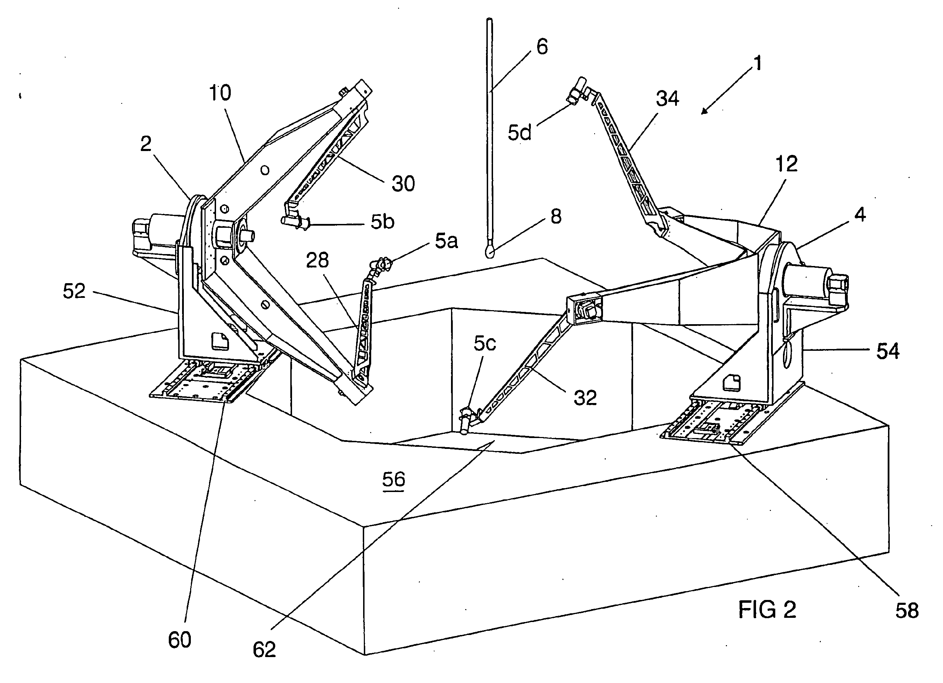

Figur 2 zeigt eine konkrete Ausführungsform eines Hemispähren-Goniophotometers 1. Die beiden Geräteeinheiten 2, 4 mit den Dreharmen 10, 12 sowie den daran angelenkten Schwenkarmen 28, 30; 32, 34 sind jeweils über eine Konsole 52, 54 auf einem Fundament 56 eines Messraums gelagert. Bei dem dargestellten Ausführungsbeispiel sind die Konsolen 52, 54 entlang von auf dem Fundament 56 abgestützten Führungen 58, 60 verschiebbar, so dass einerseits die Geräteeinheiten 2, 4 exakt mit Bezug zur Brennlage der Lampe 8 ausrichtbar sind und zum anderen die sehr schweren Geräteeinheiten 2, 4 zur besseren Zugänglichkeit des Messraums aus ihrer Messposition heraus in eine Parkposition verschoben werden können. Sämtliche Aussenflächen des Messsystems sowie die Wandungen des Messraums sind mit einem reflektionsarmen Anstrich versehen.

Das Fundament 56 hat zwischen den beiden Geräteeinheiten 2, 4 eine Bodenausnehmung 62, in die während eines Messzyklus die voll ausgeschwenkten Schwenkarme 28, 30, 32, 34 eintauchen können. Die Lampe oder Leuchte 8 wird bei dem dargestellten Ausführungsbeispiel durch den Messobjekthalter 6 in einer hängenden Brennlage gehalten. Wie im Folgenden noch näher erläutert wird, können selbstverständlich auch andere Brennlagen mit minimaler Abschattung gewählt werden.

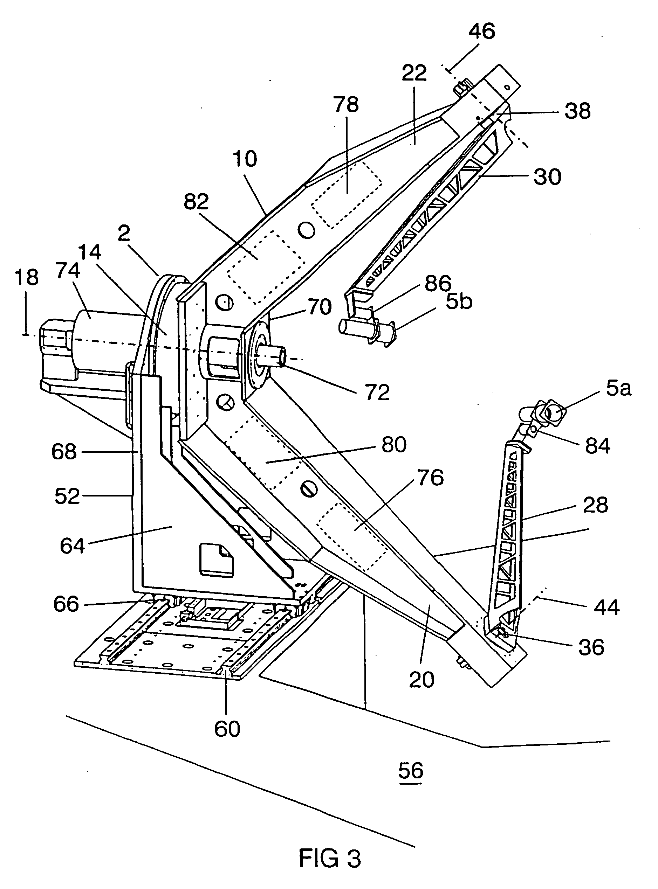

Einzelheiten der identisch aufgebauten Geräteeinheiten 2, 4 werden im Folgenden anhand Figur 3 erläutert, die die Geräteeinheit 2 gemäß Figur 2 zeigt.

Da es bei dem Goniophotometer auf eine möglichst exakte und reproduzierbare Pösitionierbarkeit der Messköpfe 5a, 5b, 5c, 5d ankommt, sind sämtliche tragenden Bauelemente der Geräteeinheiten 2, 4 sehr stabil ausgeführt, wobei jedoch zur Minimierung der Massenträgheitsmomente auf möglichst geringes Gewicht geachtet wurde.

Die Konsole 52 ist eine Schweißkonstruktion und hat einen etwa L-förmigen Aufbau, der durch Verstärkungsrippen 64 verstärkt ist. An dem unteren, kürzeren L-Schenkel der Konsole 52 sind Führungsschuhe 66 ausgebildet, die ein Verschieben entlang der beiden Parallelführungen 60 ermöglichen. Der längere, sich vertikal erstreckende L-Schenkel der Konsole 52 ist als Stützplatte 68 ausgeführt, an der der Hauptantrieb 14 des Dreharms 10 angeflanscht ist. Beim dargestellten Ausführungsbeispiel ist dieser Hauptantrieb 14 als AC-Synchron-Direktantrieb ausgeführt, der in Axialrichtung sehr kurz baut und der mit einer sehr hohen Genauigkeit ansteuerbar ist. Auf der Welle des Hauptantriebs 14 sitzt der Dreharm 10, der bei dem dargestellten Ausführungsbeispiel aus einem Doppel-T-Profil hergestellt ist, das rückseitig breiter als vorderseitig (zur Lampe 8 hin) ausgeführt ist. Dabei erstrecken sich die beiden Schenkel 20, 22 von einer diese verbindenden vertikal verlaufenden Basis 70 V-förmig nach außen, wobei sich das Doppel-T-Profil zu den Endabschnitten hin verjüngt. Die den Dreharm 10 tragende Welle des Hauptantriebs 14 ist als Hohlwelle ausgeführt und ist drehfest mit der Basis 70 des Dreharms 10 verbunden. Gemäß Figur 3 ist in den lampenseitigen Endabschnitt der Hohlwelle oder in eine entsprechende Ausnehmung der Basis 70 ein Positionierlaser 72 eingesetzt, dessen optische Achse in der Drehachse 18 verläuft. Entsprechende Positionierlaser (nicht gezeigt) können auch in den Schwenkachsen 44, 46, 48, 50 sowie an den Messköpfen 5a, 5b, 5c, 5d vorgesehen werden, um eine exakte Positionierung der Lampe 8 und eine Justierung des gesamten Systems zu erleichtern.

Die Welle des Hauptantriebs 14 ist durch die Stützplatte 68 der Konsole 52 hindurch nach hinten (links in Figur 3) verlängert und trägt ein Schleifringsystem 74, über das alle wesentlichen Messsignale und Steuersignale für die Schwenkantriebe 36, 38, 40, 42 geführt werden. Die Steuereinheit (nicht gezeigt) zur Ansteuerung des Hauptantriebs 14 ist an der Rückseite der Stützplatte 68 befestigt. Die Stromversorgung der Verstärker 76, 78 für die Antriebe und der Messgeräte 80, 82 erfolgt ebenfalls über die Schleifringanordnung 74.

An den freien Endabschnitten der beiden Schenkel 20, 22 sind die Schwenkantriebe 36, 38 für die beiden Schwenkarme 28, 30 gelagert. Diese Schwenkantriebe 36, 38 sind als sehr kompakt gebaute Getriebemotoren ausgebildet, die jeweils über einen Verstärker 76, 78 ansteuerbar sind. Erfindungsgemäß sind auch diese - wie in Figur 3 gestrichelt angedeutet - am Dreharm 10 befestigt, so dass die gepulsten Leistungssignale zur Ansteuerung der Schwenkantriebe 36, 38 nur über einen vergleichsweise kurzen Weg geführt werden müssen. Die dem Verstärker 76, 78 zugeführten Steuersignale werden in Form eines Antriebsbus über die Schleifringanordnung 74 übertragen.

Entsprechend sind auch die zu den Messköpfen 5a, 5b gehörenden Messgeräte und AD-Wandler 80, 82 am Tragarm 10 gelagert, so dass die vom Messkopf 5a, 5b erfassten Signale entlang sehr kurzer Leitungen zum Messgerät 80, 82 übertragen, dort digitalisiert und dann über einen Bus (Profibus, IEEE 488, CAN) und die Schleifringanordnung 74 abgegriffen werden. Da über die Schleifringanordnung keine gepulsten Leistungssignale zur Ansteuerung der Schwenkantriebe 36, 38, 40, 42 geführt werden, können Interferenzen zwischen den Messsignalen und den Leistungssignalen verhindert werden. Durch die kurzen Übertragungswege von der Hauptantriebssteuerung zum Hauptantrieb 14 sowie von den Verstärkern 76, 78 zu den Schwenkantrieben 36, 38 sowie die kurzen Signalübertragungswege zwischen den Messköpfen 5a, 5b und den dazu gehörigen Messgeräten 80, 82 können die Messfehler auf ein Minimum reduziert werden. Die Konstruktion ist so stabil ausgelegt, dass die Anordnung der Messgeräte 80, 82 und der Verstärker 76, 78 auf dem Dreharm 10 weder im Hinblick auf eine Verformung der Komponenten noch im Hinblick auf die Genauigkeit der Drehbewegung eine Rolle spielt. Prinzipiell kann auch ein Rechner zur Signalverarbeitung am Dreharm 10 angebracht werden, wobei die Daten dann beispielsweise über Ethernet, WLAN etc. übertragen werden.

Die Schwenkarme 28, 30 sind zur Minimierung des Gewichts als Fachwerkkonstruktion mit Dreiecksprofil ausgeführt, das sich zu den Messköpfen 5a, 5b hin verjüngt. Dabei sind an den Endabschnitten der Schwenkarme 28, 30 Halterungen 84, 86 vorgesehen, die mit Aufnahmen zur Befestigung der Messköpfe 5a, 5b ausgeführt sind. Diese Halterungen 84, 86 sind so an den Tragarmen 28, 30 angeordnet, dass die Messköpfe 5a, 5b während der Schwenkbewegung der Schwenkarme 28, 30 und der umlaufenden Drehbewegung des Dreharms 10 stets hin zur Brennstellung ausgerichtet sind. Dies wird dann erreicht, wenn die Achse der Messköpfe 5a, 5b um 45° zur Schwenkachse des jeweiligen Schwenkantriebs 36, 38 angestellt sind.

Bei dem gezeigten Ausführungsbeispiel ist die Geometrie der beiden Schenkel 20, 22 des Dreharms 10 sowie die Geometrie der beiden Schwenkarme 28, 30 so gewählt, dass sich in der eingeschwenkten Position der Spalt zwischen dem jeweiligen Schenkel 20, 22 und dem daran angelenkten Schwenkarm 28, 30 vom Schwenkantrieb 36, 38 weg zum Messkopf 5a, 5b hin vergrößert, wobei der Messkopf 5a oder der Messkopf 5b bei vollständig eingefahrenem Schwenkarm 28, 30 in der Schwenkachse 18 liegt. D.h. beide Messköpfe 5a, 5b können nur nacheinander die Polposition erreichen.

Sämtlichen Dreh- oder Schwenkantrieben des Systems sind Drehwinkelsensoren zugeordnet, über die die Winkelposition der Dreharme 10, 12 sowie der Schwenkarme 28, 30 und daraus auch die Drehgeschwindigkeit dieser Elemente erfassbar sind. Die entsprechenden Signale der Drehwinkelsensoren werden ebenfalls über das Bussystem und die Schleifringanordnung 74 übertragen.

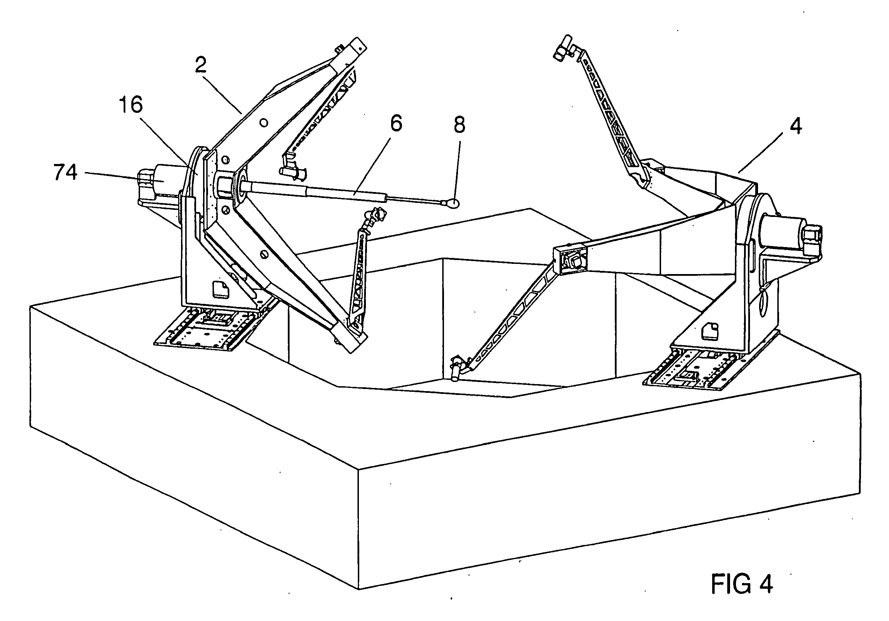

Bei dem in Figur 3 dargestellten Ausführungsbeispiel wird die Lampe 8 in einer hängenden Brennstellung gehalten. Figur 4 zeigt ein Ausführungsbeispiel, bei dem die Lampe 8 einseitig in Horizontalstellung gehalten wird, wobei der Messobjekthalter 6 die Hohlwelle und die Schleifringanordnung 74 in Axialrichtung durchsetzt und rückseitig befestigt ist. Zur Befestigung von beidseitig gesockelten Lichtquellen, beispielsweise Leuchtstofflampen kann auch die Geräteeinheit 4 von einem Messobjekthalter 6 durchsetzt werden, so dass die Leuchtstoffröhre beidseitig in Horizontalrichtung gehalten wird. Entsprechend ist es auch möglich, die Lampe beidseitig in Vertikalrichtung zu halten, wobei ein weiterer Messobjekthalter stehend in der Bodenausnehmung 62 befestigt ist. Prinzipiell ist es auch möglich, die Lampe 8 mittels einer Geräteeinheit 2 zu halten, wobei dann über die andere Geräteeinheit 4 eine Hemisphäre abgefahren und dann nach Drehung der Lampe 8 um 180° die zweite Hemisphäre abgetastet wird. Diese Möglichkeit wird in der Praxis jedoch eher eine untergeordnete Rolle spielen. Es kann aber so ohne jeden zusätzlichen Aufwand die Winkelabhängigkeit der Strahlungsgrößen von der Brennlage von Lampen untersucht werden.

Wie eingangs beschrieben, können die beiden Schwenkarme 28, 30; 32, 34 jeder Geräteeinheit 2, 4 zu Beginn und zu Ende eines Messzyklus unterschiedliche Relativpositionen zueinander einnehmen. Prinzipiell wird es bevorzugt, dass die Schwenkarme jeweils etwa symmetrische Positionen zueinander einnehmen, damit die statische und die dynamische Unwucht minimal sind. So kann bei einer hängenden Brennlage ein Schwenkarm 28, 30 in eine Polposition verfahren werden, während der andere Schwenkarm 28, 30 um ein oder zwei Winkelpositionen dazu versetzt angeordnet ist, um eine Kollision zwischen den Messköpfen 5a, 5b zu vermeiden. D.h. die beiden Schwenkarme 28, 30 eines Dreharms 10 befinden sich beispielsweise weitestgehend in der eingefahrenen Position, während sich zur Vermeidung von Kollisionen die beiden Schwenkarme 32, 34 der anderen Geräteeinheit 4 in oder nahe der ausgefahrenen Äquatorposition befinden. Wie beschrieben, werden die Messköpfe 5a, 5b, 5c, 5d einer Geräteeinheit 2, 4 während des Messvorgangs entweder auf gleichen Bewegungsbahnen (doppelte Messung) oder auf unterschiedlichen Bewegungsbahnen (Verkürzung der Messdauer) geführt. Dabei kann die Bewegungsbahn sich spiralförmig zwischen Pol und Äquator erstrecken oder die Bewegungsbahn verläuft in jedem Winkelschritt entlang einer Kreisbahn, so dass die Kugel sozusagen in "Scheiben" aufgeteilt ist.

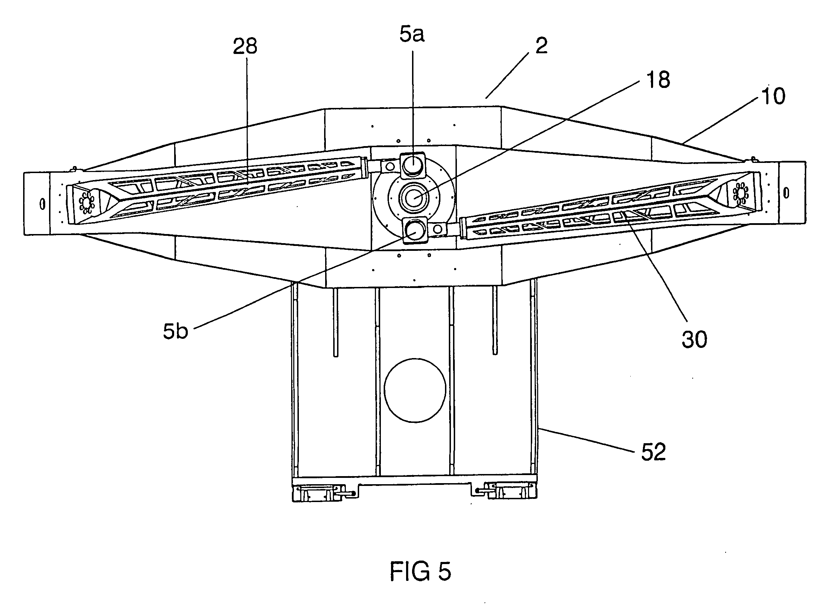

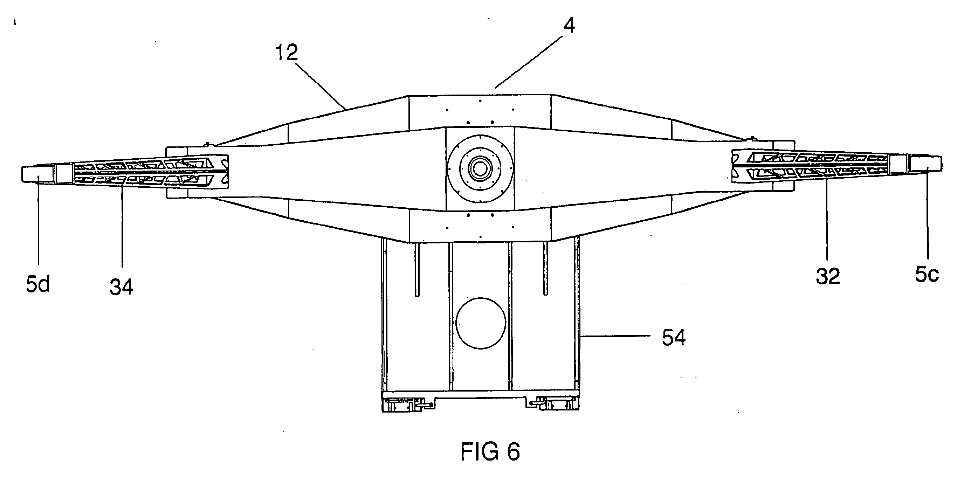

In Figur 5 ist eine Vorderansicht in Richtung der Drehachse 18 auf die Geräteeinheit 2 dargestellt, wobei sich beide Schwenkarme 28, 30 nahe der Polposition befinden. Bei der dargestellten Relativposition befindet sich keiner der Messköpfe 5a, 5b in der Drehachse 18 der Hauptantriebe. Diese Schwenkarmposition 28, 30 ist beispielsweise bei einer horizontalen Brennstellung der Lampe 8 gemäß Figur 4 erforderlich, da ansonsten die Messköpfe 5a, 5b mit dem Messobjekthalter 6 kollidieren würden. Die beiden Schwenkarme 32, 34 der andere Geräteeinheit 4 können sich dann in der in Figur 6 dargestellten vollständig ausgefahrenen Äquatorposition befinden, in der die beiden Messköpfe 5c, 5d auf einer maximalen Umlaufbahn mit einem Durchmesser von beispielsweise 5950 mm um die Lampe 8 geführt werden. Die Schwenkarme 28, 30 werden dann gegenläufig ausgefahren, während die Schwenkarme 32, 34 gegenläufig eingefahren werden.

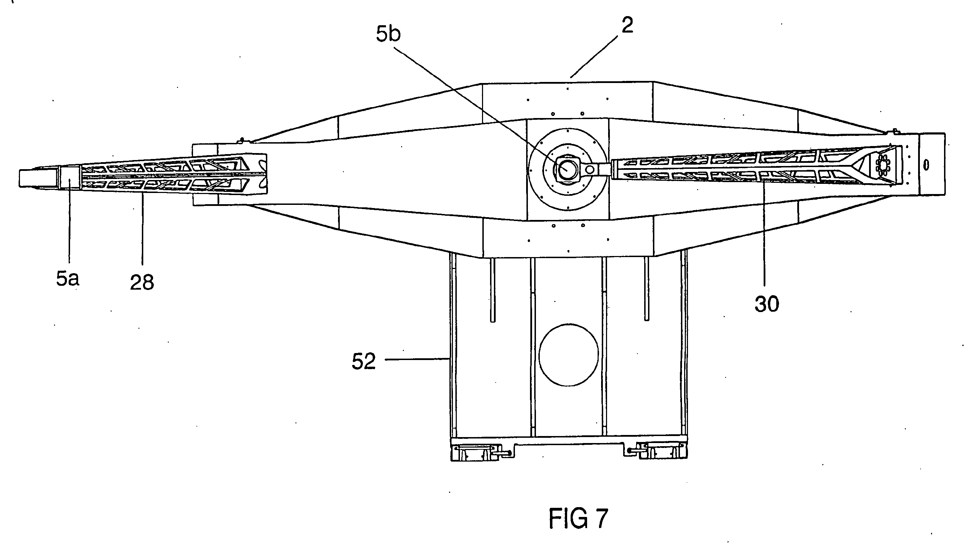

Bei den vorbeschriebenen Relativpositionen der Schwenkarme 28, 30, 32, 34 sind diese im Wesentlichen symmetrisch angeordnet. Figur 7 zeigt eine Position zu Beginn oder am Ende eines Messzyklus, wobei der Schwenkarm 30 in seine Polposition eingeschwenkt ist und somit der Messkopf 5b in der Drehachse 18 liegt, während der andere Dreharm 28 in seine Äquatorposition ausgeschwenkt ist und der Messkopf 5a entlang eines Großkreises umläuft. Durch die asymmetrische Anordnung der Schwenkarme 28, 30 wird zwar eine gewisse statische und dynamische Unwucht in das System eingebracht, aufgrund der stabilen Konstruktion sind jedoch auch derartige Relativanordnungen ohne weiters realisierbar.

Die vorbeschriebene Bauform der beiden Geräteeinheiten 2, 4 erlaubt es, jeden Messkopf 5 ausgerichtet zum Gerätezentrum (Mittelpunkt der Lampe 8) an jedem Ort seiner Hemisphäre zu plazieren. Der eigentliche Messbetrieb muss aber in Bewegung erfolgen, denn die Zeitspanne um allein zum Beispiel für eine Winkelauflösung von Δϕ = Δϑ = 1° per stop-andgo-Bewegung die zugehörenden 64800 Positionen einzunehmen, wäre viel zu groß.

Um beim Betrieb des Goniophotometers 1 Kollisionen der Messköpfe 5 zu vermeiden, müssen folgende Grundregeln eingehalten werden:
a) Die Polstellung muss für jede Geräteeinheit 2, 4 von den beiden Messköpfen 5 nacheinander eingenommen werden;
b) in der Äquatorstellung werden Kollisionen zwischen den Messköpfen 5 vermieden, falls die Drehung der Dreharme 10, 12 gleichsinnig und versetzt, beispielsweise um 90° erfolgt. Dadurch wird auch wechselweise der Streulichtanteil durch Reflexion an der Lichteintrittsfläche vermieden;
c) in der Äquatorstellung der Schwenkarme 28, 30, 32, 34 würde jeder Messkopf 5 pro Umlauf ein Mal mit dem Messobjekthalter 6 (bei hängender, stehender Brennstellung) kollidieren. Da aber die Position der Halterung genau bekannt ist, kann die Kollision durch ein Ausweichmanöver mit dem jeweiligen einzeln gesteuerten Schwenkantrieb vermieden werden.

Die einzeln gesteuerten Antriebe ermöglichen Bewegungen der Messgeräteköpfe auf verschiedenen Bahnen, beispielsweise mit konstanter Bahngeschwindigkeit, mit konstantem Raumwinkelanteil oder optimiert unter Berücksichtigung der zu messenden Lichtstärkeverteilung.

Bei dem vorbeschriebenen Ausführungsbeispiel lässt sich der Radius der beiden Hemisphären nicht verändern. Dies könnte beispielsweise dadurch erreicht werden, dass die Schwenkarme 28, 30, 32, 34 jeweils mit weiteren Achsen ausgestattet werden, so dass der Radius der Messköpfe 5 innerhalb gewisser Grenzen variierbar ist. Eine derartige Lösung würde jedoch den Aufwand zur Erstellung des Hemisphären-Goniophotometers wesentlich erhöhen.

Offenbart ist ein Hemisphären-Goniophotometer, bei dem an einem umlaufenden Dreharm zwei Schwenkarme angelenkt sind, die jeweils einen Messkopf tragen. Die Geometrie der Anordnung ist so gewählt, dass die Messköpfe bei Drehen des Dreharms um 360° und Verschwenken der Schwenkarme um 180° entlang der Hüllfläche einer Hemisphäre bewegbar sind.

## Patentansprüche

1. Goniophotometer zur Messung von photo-, spektröradio- und/oder colorimetrischen Größen der optischen Strahlung einer Licht-/Strahlungsquelle (8), die von einem Messobjekthalter (6) in einer Brennlage gehalten ist, mit zumindest einem auf die Licht-/Strahlungsquelle (8) gerichteten Messkopf (5), der zur Erfassung der Größe mittels einer von einem Antrieb angetriebenen Führungseinrichtung entlang einer vorbestimmten Bewegungsbahn, vorzugsweise auf einer Hüllfläche einer Kugel oder Hemisphäre um die Licht-/Strahlungsquelle bewegbar ist, **gekennzeichnet durch** eine Geräteeinheit (2, 4) mit einem umlaufenden Dreharm (10, 12) mit zwei zueinander angestellten Schenkeln (20, 22; 24, 26), an deren Endabschnitten jeweils ein einen Messkopf (5) tragender Schwenkarm (28, 30, 32, 34) schwenkbar gelagert ist, wobei sich deren Schwenkachsen (44, 46, 48, 50) und die Drehachse (18) des Dreharms (10, 12) in der Messposition der Licht-/Strahlungsquelle (8) schneiden und wobei die Schwenkarme (28, 30, 32, 34) mittels eines Schwenkantriebs (36, 38, 40, 42) zwischen einer eingeschwenkten Polposition, in der der Messkopf (5) in der Drehachse (18) liegt, und einer ausgeschwenkten Äquatorposition in beliebig kleinen Schritten verschwenkbar sind, in der der Messkopf (5) entlang einer Umlaufbahn mit maximalem Durchmesser um die Licht-/Strahlungsquelle (8) geführt ist.

2. Goniophotometer nach Anspruch 1, wobei die Schwenkachsen (42, 44, 46, 48) mit der Drehachse (18) jeweils einen Winkel von 45° einschließen.

3. Goniophotometer nach Anspruch 1 oder 2, wobei zwei Geräteeinheiten (2, 4) diametral zueinander angeordnet sind und die Drehachsen (18) der Geräteeinheiten (2, 4) sowie jeweils zwei Schwenkachsen (44, 50; 46, 48) koaxial zueinander verlaufen.

4. Goniophotometer nach einem der vorhergehenden Ansprüche, wobei die Schenkel (20, 22, 24, 26) des Dreharms (10, 12) etwa V-förmig zueinander angeordnet sind.

5. Goniophotometer nach einem der vorhergehenden Ansprüche, wobei der Dreharm (10, 12) drehbar an einer den Hauptantrieb (14) tragenden Konsole (52, 54) gelagert ist, die vorzugsweise entlang einer Führung (58, 60) verschiebbar ist, wobei die Drehachse (18) des Hauptantriebs (14, 16) parallel zu einem die Führungen (58, 60) tragenden Fundament (56) verläuft.

6. Goniophotometer nach einem der vorhergehenden Ansprüche, wobei der Hauptantrieb (14, 16) und die Schwenkantriebe (36, 38, 40, 42) der Schwenkarme (28, 30, 32, 34) unabhängig voneinander ansteuerbar sind, so dass die Messköpfe (5) einer Geräteeinheit (2, 4) entlang unterschiedlicher oder gleicher Bewegungsbahnen bewegbar sind.

7. Goniophotometer nach einem der vorhergehenden Ansprüche, wobei der Hauptantrieb (14, 16) ein rotativer AC-Synchron-Direktantrieb und der Schwenkantrieb (36, 38, 40, 42) ein über einen Verstärker angesteuerter Getriebemotor ist, wobei der Verstärker (76, 78) am Dreharm (10, 12) gelagert ist.

8. Goniophotometer nach einem der vorhergehenden Ansprüche, wobei die Messköpfe (5) Element eines Photometers, eines Dreibereichfarbmesskopfes, eines Spektralradiometers oder einer Leuchtdichtekamera sind, deren AD-Wandler am zugehörigen Dreharm (10, 12) gelagert sind.

9. Goniophotometer nach Anspruch 3 und 8, wobei die Schwenkarme (28, 30, 32, 34) gleiche oder unterschiedliche Messköpfe (5) tragen oder wobei beide Goniophotometereinheiten (2, 4) mit den gleichen Messkopfpaarungen versehen sind.

10. Goniophotometer nach den Ansprüchen 6, 7, 8 oder 9, wobei digitalisierte Messsignale, analoge Messsignale und/oder Steuersignale für die Antriebe (14, 16, 36, 38, 40, 42) über einen koaxial zur Drehachse (18) angeordneten Schleifring und ein Bussystem übertragbar sind.

11. Goniophotometer nach Anspruch 10, wobei der Hauptantrieb (14, 16) mit einer die Schleifringanordnung (74) tragenden Hohlwelle ausgeführt ist, die koaxial von dem Messobjekthalter (6) sowie von Versorgungs- oder Messleitungen durchsetzbar ist.

12. Goniophotometer nach einem der Ansprüche 3 bis 11 wobei die Dreharme (10, 12) während des Messbetriebs - vorzugsweise um 90° - versetzt zueinander umlaufen und wobei zu Beginn der Messung die beiden Schwenkarme (28, 30; 32, 34) in bzw. nahe der Polposition und die Schwenkarme (28, 30; 32, 34) der anderen Geräteeinheit (2, 4) in bzw. nahe der Äquatorposition angeordnet sind.

13. Goniophotometer nach einem der vorhergehenden Ansprüche, wobei die Schwenkarme (28, 30, 32, 34) um 360° verschwenkbar sind.

14. Goniophotometer nach einem der vorhergehenden Ansprüche, wobei in den Achsen (18, 44, 46, 48, 50) Positionierlaser oder dergleichen angeordnet sind.

15. Goniophotometer nach einem der vorhergehenden Ansprüche, wobei den Antriebsachsen (18, 44, 46, 48, 50) Drehwinkelsensoren zur Erfassung der Drehposition und der Drehgeschwindigkeit des Dreharms (10, 12) und/oder der Schwenkarme (28, 30, 32, 34) zugeordnet sind.

16. Goniophotometer nach einem der vorhergehenden Ansprüche, wobei die Licht-/Strahlungsquelle (8) drehbar am Messobjekthalter (6) gelagert ist.

## Claims

1. Goniophotometer for measurement of photometric, spectroradiometric and/or colorimetric variables of the optic radiation from a light/radiation source (8) which is held at a mounting position by a measurement object holder (6), having at least one measurement head (5) which points at the light/radiation source (8) and which, in order to record the variable, can be moved by means of a guide device, which is driven by a drive, along a predetermined movement path, preferably on an envelope surface of a sphere or hemisphere around the light/radiation source, **characterized by** an appliance unit (2, 4) with a revolving rotating arm (10, 12) with two limbs (20, 22; 24, 26) which are angled with respect to one another and on each of whose end sections a pivoting arm (28, 30, 32, 34), to which a measurement head (5) is fitted, is mounted such that it can pivot, with their pivoting axes (44, 46, 48, 50) and the rotation axis (18) of the rotating arm (10, 12) intersecting at the measurement position of the light/radiation source (8), and in which case the pivoting arms (28, 30, 32, 34) can be pivoted by means of a pivoting drive (36, 38, 40, 42) between a pivoted-in pole position, in which the measurement head (5) is located on the rotation axis (18), and a pivoted-out equatorial position in indefinitely small steps, with the measurement head (5) being guided around the light/radiation source (8) along an orbital path with a maximum diameter.

2. Goniophotometer according to claim 1, in which the pivoting axes (42, 44, 46, 48) each include an angle of 45° with the rotation axis (18).

3. Goniophotometer according to claim 1 or 2, with two appliance units (2, 4) being arranged diametrically opposite one another, and with the rotation axes (18) of the appliance units (2, 4) as well as in each case two pivoting axes (44, 50; 46, 48) running coaxially with respect to one another.

4. Goniophotometer according to one of the preceding claims, with the limbs (20, 22, 24, 26) of the rotating arm (10, 12) being arranged approximately in a V-shape with respect to one another.

5. Goniophotometer according to one of the preceding claims, with the rotating arm (10, 12) being mounted such that it can rotate on a bracket (52, 54) to which the main drive (14) is fitted and which can preferably be moved along a guide (58, 60), with the rotation axis (18) of the main drive (14, 16) running parallel to a foundation (56), to which the guides (58, 60) are fitted.

6. Goniophotometer according to one of the preceding claims, with the main drive (14, 16) and the pivoting drives (36, 38, 40, 42) of the pivoting arms (28, 30, 32, 34) being drivable independently of one another, such that the measurement heads (5) of an appliance unit (2, 4) can be moved along different movement paths or the same movement paths.

7. Goniophotometer according to one of the preceding claims, with the main drive (14, 16) being a rotating AC synchronous direct drive and the pivoting drive (36, 38, 40, 42) being a geared motor which is driven via an amplifier, with the amplifier (76, 78) being mounted on the rotating arm (10, 12).

8. Goniophotometer according to one of the preceding claims, with the measurement heads (5) being an element of a photometer, of a three-area color measurement head, of a spectral radiometer or of a luminance intensity camera, whose A/D converters are mounted on the associated rotating arm (10, 12).

9. Goniophotometer according to claims 3 and 8, with the pivoting arms (28, 30, 32, 34) being fitted with identical or different measurement heads (5) or with both goniophotometer units (2, 4) being provided with the same measurement head pairs.

10. Goniophotometer according to claim 6, 7, 8 or 9, in which case digitized measurement signals, analog measurement signals and/or control signals for the drives (14, 16, 36, 38, 40, 42) can be transmitted via a slipring, which is arranged coaxial with respect to the rotation axis (18), and a bus system.

11. Goniophotometer according to claim 10, with the main drive (14, 16) being designed with a hollow shaft to which the slipring arrangement (74) is fitted and through which the measurement object holder (6) as well as supply lines or measurement lines pass coaxially.

12. Goniophotometer according to one of claims 3 to 11, with the rotating arms (10, 12) revolving offset with respect to one another - preferably through 90° - during measurement operation, and with the two pivoting arms (28, 30; 32, 34) being arranged in or close to the pole position and the pivoting arms (28, 30; 32, 34) of the other appliance unit (2, 4) being arranged in or close to the equatorial position at the start of the measurement.

13. Goniophotometer according to one of the preceding claims, in which case the pivoting arms (28, 30, 32, 34) can pivot through 360°.

14. Goniophotometer according to one of the preceding claims, with positioning lasers or the like being arranged on the axes (18, 44, 46, 48, 50).

15. Goniophotometer according to one of the preceding claims, with the drive axes (18, 44, 46, 48, 50) having associated rotation angle sensors for recording the rotation position and the rotation rate of the rotating arm (10, 12) and/or of the pivoting arms (28, 30, 32, 34).

16. Goniophotometer according to one of the preceding claims, with the light/radiation source (8) being mounted on the measurement object holder (6) such that it can rotate.

## Revendications

1. Goniophotomètre de mesure de grandeurs photométriques, spectroradiométriques et/ou colorimétriques du rayonnement optique d'une source de lumière/ rayonnement (8), qui est maintenu dans une position de fonctionnement dans un porte-objet de mesure (6), comportant au moins une tête de mesure (5), dirigée sur la source de lumière/rayonnement (8), tête de mesure qui, pour déterminer la grandeur, peut se déplacer à l'aide d'un dispositif de guidage, entraîné par un dispositif d'entraînement, le long d'une trajectoire prédéfinie, de préférence sur une surface enveloppe d'une sphère ou d'une hémisphère qui entoure la source de lumière/ rayonnement, **caractérisé par** un bloc fonctionnel (2, 4), comportant un bras rotatif tournant (10, 12) comportant deux branches (20, 22 ; 24, 26) dirigées l'une contre l'autre, au niveau de chacun des segments terminaux desquels un bras pivotant (28, 30, 32, 34), portant une tête de mesure (5), est monté pivotant, leurs axes de pivotement (44, 46, 48, 50) et l'axe de rotation (18) du bras rotatif (10, 12) se coupant dans la position de mesure de la source de lumière/rayonnement (8), et les bras pivotants (28, 30, 32, 34) pouvant pivoter, par petits incréments quelconques, entre une position polaire rabattue, dans laquelle la tête de mesure (5) se trouve dans l'axe de rotation (18), et une position équatoriale déployée, la tête de mesure (5) étant guidée le long d'une orbite ayant un diamètre maximal autour de la source de lumière/rayonnement (8).

2. Goniophotomètre selon la revendication 1, dans lequel les axes de pivotement (42, 44, 46, 48) font chacun avec l'axe de rotation (18) un angle de 45°.

3. Goniophotomètre selon la revendication 1 ou 2, dans lequel deux blocs fonctionnels (2, 4) sont disposés d'une manière diamétralement opposée l'un à l'autre, et les axes de rotation (18) des blocs fonctionnels (2, 4), tout comme chaque paire d'axes de pivotement (44, 50 ; 46, 48), s'étendant coaxialement l'un par rapport à l'autre.

4. Goniophotomètre selon l'une des revendications précédentes, dans lequel les bras (20, 22, 24, 26) du bras rotatif (10, 12) sont disposés en formant entre eux approximativement un V.

5. Goniophotomètre selon l'une des revendications précédentes, dans lequel le bras rotatif (10, 12) est logé de façon à pouvoir tourner sur une console (52, 54) portant l'entraînement principal (14), console qui peut subir une translation de préférence le long d'un guidage (58, 60), l'axe de rotation (18) de l'entraînement principal (14, 16) s'étendant parallèlement à une semelle (56) portant les guidages (58, 60).

6. Goniophotomètre selon l'une des revendications précédentes, dans lequel l'entraînement principal (14, 16) et les organes de pivotement (36, 38, 40, 42) des bras pivotants (28, 30, 32, 34) peuvent être pilotés indépendamment les uns des autres, de telle sorte que les têtes de mesure (5) d'un bloc fonctionnel (2, 4) puissent se déplacer le long de trajectoires différentes ou identiques.

7. Goniophotomètre selon l'une des revendications précédentes, dans lequel l'entraînement principal (14, 16) est un organe d'entraînement direct rotatif synchrone en courant alternatif, et l'organe de pivotement (36, 38, 40, 42) est un moteur d'entraînement commandé par un amplificateur, l'amplificateur (76, 78) étant disposé sur le bras rotatif (10, 12).

8. Goniophotomètre selon l'une des revendications précédentes, dans lequel les têtes de mesure (5) sont chacune un élément d'un photomètre, d'une tête de mesure colorimétrique par tristimulus, d'un spectroradiomètre ou d'une caméra à amplification de luminance, dont le convertisseur analogique-numérique est disposé sur le bras rotatif correspondant (10, 12).

9. Goniophotomètre selon les revendications 3 et 8, dans lequel les bras pivotants (28, 30, 32, 34) portent des têtes de mesure (5) identiques ou différentes, ou encore dans lequel les deux unités de goniophotomètre (2, 4) sont pourvues des mêmes paires de têtes de mesure.

10. Goniophotomètre selon les revendications 6, 7, 8 ou 9, dans lequel des signaux de mesure numérisés, des signaux de mesure analogiques et/ou des signaux de commande pour les organes d'entraînement (14, 16, 36, 38, 40, 42) peuvent être transmis par l'intermédiaire d'une bague collectrice disposée coaxialement par rapport à l'axe de rotation (18), et d'un système de bus.

11. Goniophotomètre selon la revendication 10, dans lequel l'entraînement principal (14, 16) est réalisé avec un arbre creux portant un montage de bague collectrice (74), qui peut être traversé d'une manière coaxiale par le porte-objet de mesure (6), ainsi que par des lignes d'alimentation ou de mesure.

12. Goniophotomètre selon l'une des revendications 3 à 11, dans lequel les bras rotatifs (10, 12) tournent, pendant l'exécution de la mesure, en étant décalés l'un par rapport à l'autre, de préférence de 90°, et, au début de la mesure, les deux bras pivotants (28, 30 ; 32, 40) sont disposés dans ou au voisinage de la position polaire, et les bras pivotants (28, 30 ; 32, 34) de l'autre bloc fonctionnel (2, 4) sont disposés dans ou au voisinage de la position équatoriale.

13. Goniophotomètre selon l'une des revendications précédentes, dans lequel les bras pivotants (28, 30, 32, 34) peuvent pivoter de 360°.

14. Goniophotomètre selon l'une des revendications précédentes, dans lequel des lasers de positionnement ou analogues sont disposés dans les axes (18, 44, 46, 48, 50).

15. Goniophotomètre selon l'une des revendications précédentes, dans lequel des capteurs d'angle de rotation, destinés à capter la position en rotation et la vitesse de rotation du bras rotatif (10, 12) et/ou des bras pivotants (28, 30, 32, 34), sont affectés aux axes d'entraînement (18, 44, 46, 48, 50).

16. Goniophotomètre selon l'une des revendications précédentes, dans lequel la source de lumière/rayonnement (8) est montée en pivotement sur le porte-objet de mesure (6).
